# FASCICULE DE BREVET EUROPEEN

(11) **EP 1 041 392 B1**
(45) Date de publication et mention de la délivrance du brevet: **18.04.2007**
(21) Numéro de dépôt: 00400872.8
(22) Date de dépôt: 30.03.2000
(51) Int. Cl.: G01S 5/14, G01S 5/00

(54) **Dispositif embarqué dans un véhicule et dispositif central pour localiser avec précision ce véhicule**
Im Fahrzeug eingebautes Gerät und zentrale Einrichtung zur genauen Positionsbestimmung eines Fahrzeugs
On-board device and central device for accurate localisation of a vehicle

(30) Priorité: 31.03.1999 FR 9904060
(43) Date de publication de la demande: 04.10.2000
(73) Titulaire: Alcatel Lucent, 75008 Paris (FR)
(72) Inventeur: Roux, Raphael, 95100 Argenteuil (FR)
(74) Mandataire: Sciaux, Edmond

(56) Documents cités:
- GB-A- 2 305 568
- US-A- 5 132 695
- US-A- 5 392 052
- US-A- 5 506 587
- US-A- 5 767 804

## Description

Le but de l'invention est de proposer un dispositif pour localiser avec précision la position d'un véhicule, notamment un avion. Pour le contrôle du trafic aérien, il est nécessaire de connaître la position de chaque avion. Il est connu d'utiliser des radars, et accessoirement des transpondeurs à bord des avions, chaque transpondeur répondant à une impulsion radar en envoyant l'identité de l'avion. Un premier inconvénient des radars est qu'ils ne couvrent pas toute la surface de la terre. Un deuxième inconvénient est leur relative imprécision. Le trafic croissant sans cesse, il est nécessaire d'améliorer la précision de la détermination de la position des avions pour pouvoir réduire l'espace entre deux avions. La précision maximale des radars étant limitée par différents phénomènes, et décroissant avec la distance, il faut envisager d'autres dispositifs pour déterminer avec une meilleure précision la position de chaque avion.

Il est connu d'utiliser un récepteur GPS (Global Positioning System) à bord des avions, permettant de déterminer, avec une très grande précision, la position de l'avion par un procédé connu basé sur la réception de plusieurs signaux émis par des satellites NV de la constellation appelée Navstar. Par exemple, le document **US 5.392.052** décrit un système de localisation automatique d'un avion en cas d'urgence, comportant :
- des moyens pour déterminer périodiquement la position et la vitesse d'un avion à partir de signaux radio provenant d'une constellation de satellites de navigation ;
- et des moyens pour transmettre, à un récepteur distant cette position et un identificateur de l'avion, en cas de situation dangereuse.

Il est connu de transmettre automatiquement par radio la position de l'avion à une station au sol puis à centre de contrôle du trafic aérien via un réseau de transmission terrestre dédié à ce service. Cependant ce dispositif a deux inconvénients :
- un réseau dédié est très coûteux ;
- et la précision de la position transmise est altérée par le fait que le délais de transmission n'est pas parfaitement constant entre l'avion et le centre de contrôle : les fluctuations du délai de transmission correspondent à des écarts de position qui sont proportionnels à la vitesse, et donc qui ne sont pas négligeables lorsqu'un avion se déplace à 1000Km/h par exemple.

L'objet de l'invention est un dispositif central pour localiser avec précision au moins un véhicule muni d'un dispositif qui comporte :
- des moyens pour déterminer à bord du véhicule la position de ce véhicule à partir de signaux radio provenant d'une constellation de satellites de navigation,
- et des moyens pour transmettre périodiquement à un centre de contrôle : la position ainsi déterminée, une étiquette temporelle fournie par cette constellation de satellites de navigation , et l'identité du véhicule ;
**caractérisé en ce que** pour calculer la position dudit véhicule à un instant courant, il comporte des moyens pour :
- recevoir directement des étiquettes temporelles fournies par cette constellation de satellites de navigation,
- estimer la durée dite de transmission, écoulée entre l'instant où une position a été déterminée dans le véhicule et un instant courant où elle est reçue dans ce dispositif central, en comparant des étiquette temporelles reçues directement et des étiquettes temporelles reçues via le véhicule,
- calculer le déplacement du véhicule pendant la durée de transmission, en se basant sur la durée estimée de transmission, et en se basant sur le vecteur vitesse reçu ;
- et corriger la position reçue, en prenant en compte le déplacement ainsi calculé.

L'invention sera mieux comprise et d'autres caractéristiques apparaîtront à l'aide de la description ci-dessous et des figures l'accompagnant :
- La figure 1 représente un schéma synoptique qui illustre l'utilisation d'un système pour communiquer avec des avions, et localiser ces avions, ce système comportant des noeuds et des stations embarquées selon l'invention.
- La figure 2 représente le schéma synoptique d'un exemple de réalisation du noeud selon l'invention.
- La figure 3 représente le schéma synoptique d'un exemple de réalisation de la station embarquée selon l'invention, installée à bord d'un avion.

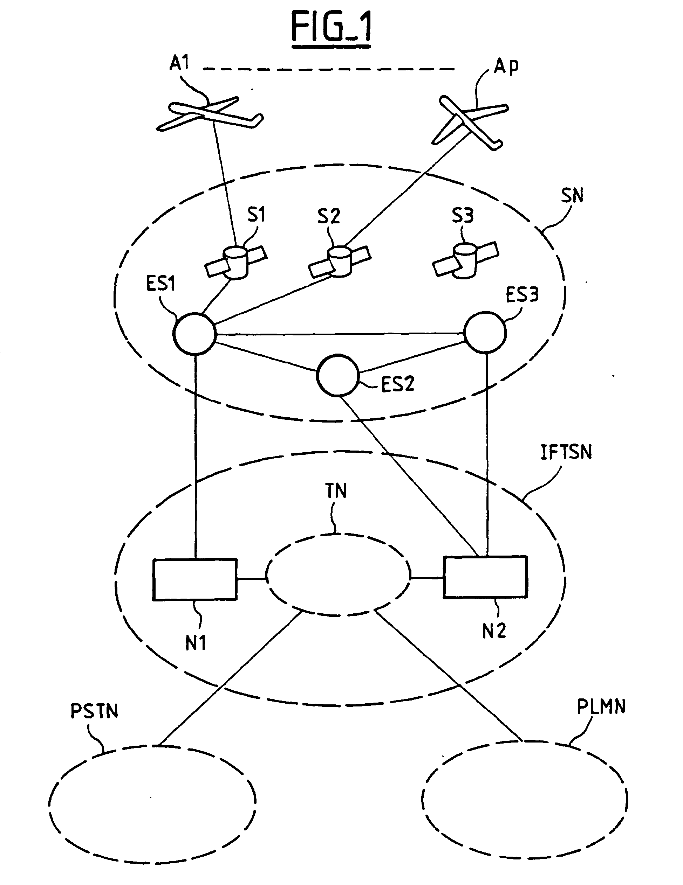

**La figure 1** représente un schéma synoptique qui illustre l'utilisation d'un système pour communiquer avec des passagers dans des avions, ce système comportant des noeuds et des réseaux locaux selon l'invention. Pour pouvoir bénéficier du service de télécommunication et des services de distractions à bord, un passager doit être joignable au moyen d'un numéro d'annuaire. Plusieurs procédés pour le rendre joignable seront décrits plus loin. Il n'est pas indispensable que le passager soit déjà abonné à un réseau téléphonique fixe ou à un réseau radiotéléphonique terrestre.

Ce système comprend essentiellement : une station embarquée (non représentée sur la figure 1) dans chaque avion A1, ..., Ap ; un réseau SN de satellites de télécommunication, de type connu, ayant une couverture mondiale, tel que le réseau commercialisé sous le nom d'Irridium ; et un réseau intermédiaire IFTSN, qui est couplé : au réseau de satellites SN, à un réseau de télécommunication fixe PSTN, et à an réseau de radiotéléphonie terrestre PLMN, du type GSM par exemple.

Le réseau de satellites SN comporte une constellation de satellites S1, S2, S3, ..., à moyenne altitude, et des stations terriennes ES1, ES2, ES3, .... Le station embarquée de chaque avion A1, ..., Ap, est à chaque instant en liaison avec un satellite. Les passagers établissent et reçoivent des communications via le réseau de satellites SN. Celui-ci voit chaque passager en cours de communication, comme un abonné fictif et temporaire de ce réseau SN. Le réseau SN est ainsi utilisé pour gérer la mobilité des passagers des avions A1, ..., Ap de la même façon qu'il gère la mobilité de n'importe quel abonné utilisant un terminal portable Irridium en n'importe quel point de la surface de la terre, pour téléphoner via ce réseau de satellites. Le réseau intermédiaire IFTSN, le réseau fixe PSTN, et le réseau de radiotéléphonie terrestre PLMN n'ont donc pas à gérer la mobilité de l'avion.

Le réseau intermédiaire IFTSN comporte une pluralité de noeuds N1, N2,..., et un réseau de transit TN reliant tous ces noeuds : entre eux, au réseau fixe PSTN, et au réseau radiotéléphonique terrestre PLMN. Les stations terriennes ES1, ES2, ES3 sont reliées entre elles, et par ailleurs la station ES1 est reliée au noeud N1 alors que les stations ES2 et ES3 sont reliées au noeud N2. Chaque noeud N1, N2, ... est une passerelle entre le réseau de satellites SN et les réseaux terrestres PSTN et PLMN.

Le réseau PLMN voit chaque noeud N1, N2, ..., comme une station de base fictive, et il voit chaque passager, en cours de communication, comme un abonné mobile fictif, du réseau PLMN, qui serait situé dans la zone desservie par une de ces stations de base fictives. Le réseau PSTN voit chaque passager, en cours de communication, comme un abonné à un autre réseau fixe qui serait géré par un autre opérateur. Le réseau intermédiaire IFTSN voit le réseau SN comme un réseau radiotéléphonique terrestre classique, sachant gérer lui-même la mobilité de ses abonnés.

Chaque avion bénéficie d'un groupe d'abonnements au réseau de satellites SN. Le nombre d'abonnements fixe le nombre des passagers qui pourront établir des communications simultanément. Chaque passager qui est en cours de communication est considéré comme un abonné fictif et temporaire du réseau SN, puisque c'est le transporteur qui est le titulaire réel et permanent de ces abonnements au réseau de satellites SN.

Dans d'autres exemples de réalisation, le réseau intermédiaire IFTSN peut ne comporter qu'un seul noeud.

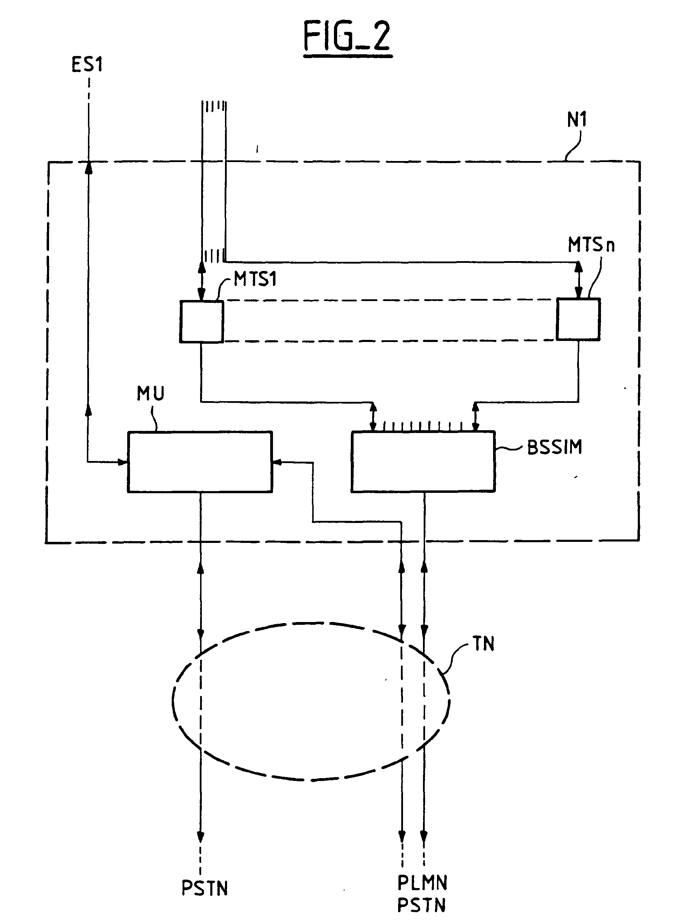

**La figure 2** représente le schéma synoptique d'un exemple de réalisation N1 du noeud selon l'invention. Il comprend :
- au moins un simulateur de station de base, BSSIM, couplé par le réseau de transit TN au réseau de radiotéléphonie terrestre PLMN, pour simuler le comportement d'une station de base de ce réseau de radiotéléphonie terrestre ;
- n simulateurs de terminal mobile MTS1,... , MTSn, reliés au simulateur de station de base, BSSIM, et reliés à la station terrienne ES1, pour simuler le comportement de n terminaux mobiles fictifs du réseau PLMN, qui resteraient en permanence dans la zone de cette station de base fictive, ces n simulateurs correspondant respectivement à n passagers en cours de communication ;
- et une unité MU de gestion du noeud N1, reliée à la station terrienne ES1 du réseau de satellites SN et couplée aux réseaux PSTN et PLMN par le réseau de transit TN .

Cette unité de gestion MU a pour fonction principale d'associer n numéros d'abonné du réseau de satellites SN à n passagers. Chacun de ces passagers est désigné par son numéro d'annuaire réel, soit d'un réseau radiotéléphonique terrestre, soit d'un réseau téléphonique fixe. Si un passager est un abonné à un réseau radiotéléphonique terrestre, et si son abonnement lui donne droit au service de téléphonie en vol via le réseau radiotéléphonique terrestre PLMN, le numéro d'annuaire de ce passager est associé en outre à l'un des simulateurs de terminaux mobiles MTS1, ..., MTSn.

Chaque simulateur de terminal mobile MTS1,... , MTSn est réalisé avec un processeur et :
- des moyens logiciels pour faire enregistrer dans les bases de données d'abonné du réseau de radiotéléphonie terrestre PLMN, à une adresse correspondant au numéro d'annuaire d'un passager, la présence d'un terminal mobile fictif dans la zone couverte par la station de base fictive correspondant au simulateur de base BSSIM, en vue de faire router vers ce simulateur tous les appels destinés à ce passager ;
- des moyens logiciels pour recevoir une demande d'établissement de communication provenant d'un passager, faire une demande d'établissement de communication dans le réseau de radiotéléphonie terrestre PLMN comme si elle provenait d'un terminal mobile de ce réseau de radiotéléphonie terrestre PLMN, et puis établir une communication avec l'avion transportant ce passager, via le réseau de satellites SN, quand la communication a été établie dans le réseau de radiotéléphonie terrestre PLMN ;
- et des moyens logiciels pour demander au réseau de satellites SN l'établissement d'une communication vers un passager, en le désignant par son numéro d'abonnement dans le réseau SN, lorsque ce simulateur reçoit un appel provenant du réseau PLMN et contenant le numéro d'annuaire de ce passager.

Le simulateur de station de base BSSIM comporte un processeur et :
- des moyens logiciels pour router vers un simulateur de terminal mobile MTSi tous les appels contenant le numéro d'annuaire désignant le passager correspondant à ce simulateur ;
- et des moyens logiciels pour router vers le réseau PLMN, respectivement le réseau PSTN, tous les appels provenant des simulateurs MTS1, ..., MTSn, et à destination de l'un de ces réseaux.

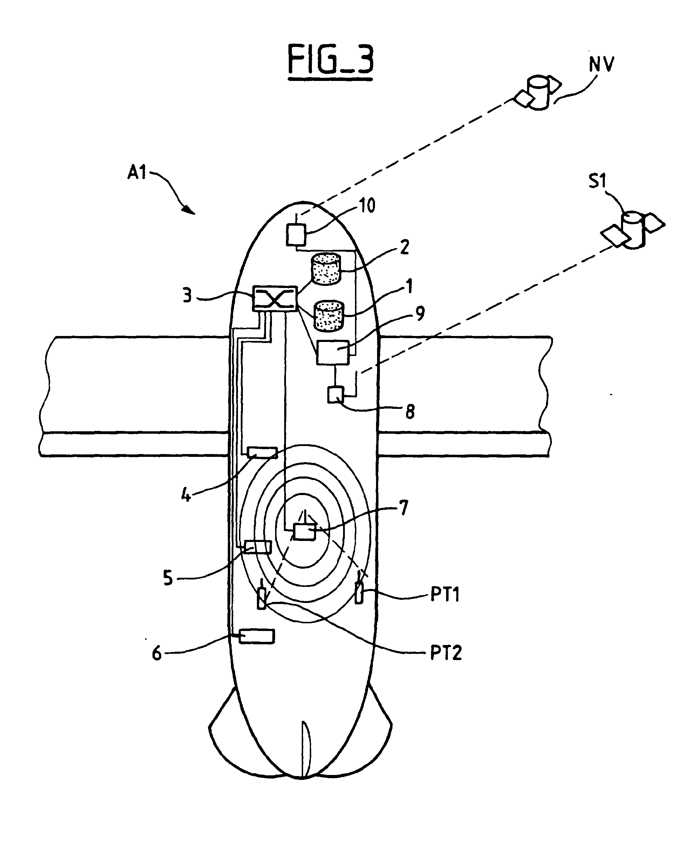

**La figure 3** représente le schéma synoptique d'un exemple de réalisation de la station embarquée selon l'invention, cette station étant installée à bord d'un avion A1 par exemple. Cette station embarquée comporte :
- des serveurs 1, 2 de distractions en vol pour fournir notamment de la vidéo à la demande ou en diffusion ;
- un commutateur 3 de trames de données de type Ethernet ;
- des concentrateurs 4, 5, 6,... de trames de données de type Ethernet, qui sont reliés d'une part à ce commutateur 3 et, d'autre part, à des terminaux voix-données intégrés aux sièges des passagers, non représentés ;
- une mini station de base 7, de type GSM, rayonnant uniquement dans la cabine de l'avion, pour permettre aux passagers d'utiliser leurs radiotéléphones GSM habituels, en dehors des phases de vol pendant lesquelles l'utilisation de radiotéléphones est interdite ;
- un émetteur-récepteur radio 8 pour établir une communication radio avec un satellite S1 du réseau de satellites SN ;
- un processeur 9, relié à l'émetteur-récepteur 8, et jouant le rôle de passerelle vis à vis du réseau de satellites SN qui le voit comme un groupe d'abonnés mobiles fictifs de ce réseau SN, chaque passager déclaré, ayant pendant la durée du vol, un numéro d'abonné du réseau SN qui est associé à son numéro d'annuaire habituel.

Ces terminaux voix-données sont de préférence compatibles avec le protocole Internet et comportent : un écran, un clavier alphanumérique, et un combiné téléphonique ou une paire d'écouteurs munie d'un micro. Ils permettent de bénéficier de multiples services : téléphonie, accès à Internet, vidéo à la demande ou en diffusion, audio, service de cabine.

Dans l'hypothèse où il serait autorisé d'utiliser des radiotéléphones à bord des avions, à l'exclusion éventuellement de la phase de décollage et de la phase d'atterrissage, la mini station de base 7 permet d'établir une liaison avec des terminaux portatifs GSM. Ainsi, les passagers qui préfèrent utiliser leur terminal radiotéléphonique GSM personnel, peuvent l'utiliser notamment pour téléphoner. Cette mini station de base 7 a une structure classique, permettant d'utiliser des radiotéléphones GSM classiques dans la cabine de l'avion. Mais elle comporte en plus un dispositif de détection de la présence d'un radiotéléphone GSM, ou d'un autre type, qui est en fonctionnement dans la cabine. Ce dispositif de détection est activable par le personnel de cabine, pendant les périodes de décollage et d'atterrissage, pour signaler cette présence automatiquement (par une alarme sonore par exemple, ou une annonce pré-enregistrée). Ce dispositif permet ainsi de faire respecter efficacement une interdiction d'utiliser des terminaux radiotéléphoniques pendant les phases de décollage et d'atterrissage.

Pour être joignable, un passager doit faire enregistrer sa présence par le processeur 9 à bord de l'avion, et par l'unité de gestion du noeud N1 qui gère les télécommunications avec cet avion. Plusieurs procédés sont utilisables :
- Les passagers qui ont avec eux leur terminal radiotéléphonique GSM personnel peuvent déclencher l'enregistrement de leur présence à bord en allumant ce terminal radiotéléphonique GSM personnel (en dehors de périodes de décollage et d'atterrissage). La mini station de base 7 signale cette présence au processeur 9 qui enregistre alors le numéro d'annuaire du passager dans une liste locale, puis qui le transmet à l'unité de gestion MU d'un noeud du réseau intermédiaire, N1 par exemple, pour qu'il associe un simulateur de terminal mobile à ce numéro d'annuaire.
- Les passagers qui n'ont pas leur radiotéléphone, ou qui ne veulent pas l'utiliser, ou qui ne sont pas autorisés à l'utiliser, peuvent déclencher l'enregistrement de leur présence à bord en allumant le terminal voix-données placé devant eux, et en choisissant une option dans un menu, et en saisissant leur numéro d'annuaire, s'ils sont abonnés à un réseau fixe, ou à un réseau radiotéléphonique terrestre, et si leur abonnement leur donne le droit de bénéficier de ce service de télécommunication à bord des avions. Optionnellement, un lecteur de carte SIM (Carte à puce, personnelle qu'on insère habituellement dans un radiotéléphone) peut être intégré à chaque terminal voix-données pour saisir automatiquement le numéro d'annuaire, et pour permettre l'utilisation de l'annuaire personnel.
- Un passager qui n'aurait aucun abonnement à un réseau terrestre, ou qui ne voudrait pas l'utiliser, pourrait demander un abonnement temporaire pour la durée du vol. Soit le transporteur se charge de gérer de tels abonnements dans un centre de facturation qui lui est propre, soit il propose aux passagers d'acheter des cartes prépayées comme les cartes classiques utilisables dans les cabines téléphoniques publiques. Les terminaux voix-données doivent alors comporter un lecteur de carte adéquat.
- Optionnellement, l'enregistrement du numéro d'annuaire de chaque passager pourrait être fait au moment où les cartes d'embarquement sont contrôlées. Le contrôle est fait par une machine. Il suffirait que cette machine soit munie d'un clavier pour que chaque passager puisse saisir son numéro d'annuaire. La machine lirait simultanément le numéro de siège sur la carte d'embarquement, ce qui permettrait de connaître ainsi quel terminal voix-données sera utilisé par le passager.

Dans tous les cas, le processeur 9 enregistre la présence de ces passagers, dans une liste, en désignant chacun par son numéro d'annuaire de réseau fixe ou de réseau radiotéléphonique terrestre. Il associe ce numéro d'annuaire à :
- un numéro disponible parmi les numéros d'abonné fictif du réseau de satellites SN, qui ont été attribués à cet avion ;
- à un numéro de siège (qui désigne le terminal voix-données utilisable par le passager) ;
- et à un compte des sommes dues pour ces services de distraction.

Il impute le coût de tous les services de distraction et de télécommunication utilisés par ce passager, sur le compte de l'abonnement téléphonique du passager, via des liaisons de signalisation du réseau SN et du réseau intermédiaire IFTSN. Il utilise les moyens de transmission de signalisation du réseau de satellites SN, du réseau intermédiaire IFTSN, et du réseau de radiotéléphonie terrestre PLMN, pour communiquer à un point de service gérant la facturation téléphonique pour ce passager, le numéro d'annuaire et le montant du compte de ce passager, en vue de facturer les services de distraction en même temps que la consommation téléphonique.

Dans l'hypothèse où le transporteur proposerait des abonnements temporaires sans carte prépayée, les données de facturations seraient transmises à un centre de facturation propre à ce transporteur.

L'unité de gestion MU et le processeur 9 communiquent pour enregistrer les mêmes données de gestion des communication. Quand le vol est terminé, le processeur 9 efface automatiquement les enregistrements de présence des passagers, dans ses propres mémoires et dans l'unité de gestion MU du noeud N1. Ces passagers peuvent alors recevoir de nouveau des appels directement sur leurs terminaux personnels à partir des réseaux radiotéléphoniques terrestres classiques.

Ce système de télécommunication permettant d'établir une liaison permanente entre le sol et un avion, en tout point de la terre, est utilisable pour constituer un dispositif permettant, aux contrôleurs du trafic aérien, de localiser avec précision un avion, en tout point de la terre. Comme représenté sur la figure 3, un avion A1 est muni d'un récepteur GPS (Global Positioning System) 10 permettant de déterminer, avec une très grande précision, la position de l'avion par un procédé connu basé sur la réception de plusieurs signaux émis par des satellites NV de la constellation appelée Navstar. Le réseau de bord transmet la position et l'heure GPS déterminés par le récepteur 10.

Le processeur 9 est relié au réseau de bord, et il comporte des moyens logiciels pour échantillonner sur le réseau de bord, périodiquement, la position et l'heure GPS, avec une période très courte (par exemple toutes les 500 millisecondes). Cette position est transmise immédiatement à un centre de contrôle du trafic, avec : une étiquette temporelle, le vecteur vitesse de l'avion, et l'identité de l'avion, via le réseau de satellite SN, le réseau intermédiaire IFTSN, et le réseau fixe PSTN. La position GPS est utilisée aussi à bord de l'avion pour la navigation.

Pour connaître la position de l'avion à l'instant courant, le centre de contrôle doit corriger la mesure de position en calculant le déplacement de l'avion pendant la durée de la transmission, en se basant sur une estimation de cette durée et sur le vecteur vitesse transmis. Les erreurs de calcul sur cette correction de la mesure de position, dues aux fluctuations du délai de transmission, ne sont pas négligeables lorsque ces fluctuations sont multipliées par une vitesse de 1000 Km/h par exemple.

Selon l'invention, cette source d'imprécision est neutralisée grâce à transmission de l'étiquette temporelle. Le centre de contrôle du trafic aérien est muni d'un calculateur qui détermine la position à l'instant courant en corrigeant la mesure de position en fonction du vecteur vitesse de l'avion, de la durée estimée du délai de transmission, et de la variation constatée pour ce délai. Le centre reçoit des étiquettes temporelles fournies directement par les satellites GPS. Une comparaison entre les étiquettes temporelles reçues directement et celles retransmises par l'avion est utilisée pour connaître la durée du délai de transmission et ses fluctuations.

Il est ainsi possible d'enregistrer la trajectoire suivie et de prédire la trajectoire future, avec une grande précision.

Ce dispositif pour déterminer une position est applicable à d'autres types de véhicules susceptibles de se déplacer en tout point de la terre, et il peut utiliser un autre système de transmission pourvu qu'il couvre toute la zone où le véhicule se déplace. Il est peu coûteux à installer dans un avion qui comporte déjà un récepteur GPS et une station embarquée selon l'invention, puisqu'il suffit de rajouter des moyens logiciels. L'infrastructure au sol est peu coûteuse aussi, bien qu'ayant une couverture mondiale, puisqu'on peut utiliser un réseau de transmission banalisé, les fluctuations du délais de transmission n'ayant pas d'effet sensible sur la précision.

## Revendications

1. Dispositif central pour localiser avec précision au moins un véhicule (A1) muni d'un dispositif qui comporte :
- des moyens (10) pour déterminer à bord du véhicule la position et la vitesse de ce véhicule à partir de signaux radio provenant d'une constellation de satellites de navigation (NV),
- et des moyens (8) pour transmettre périodiquement à un centre de contrôle : la position et le vecteur vitesse ainsi déterminés, une étiquette temporelle fournie par cette constellation de satellites de navigation (NV), et l'identité du véhicule ;
**caractérisé en ce que** pour calculer la position dudit véhicule à un instant courant, il comporte des moyens pour :
- recevoir directement des étiquettes temporelles fournies par cette constellation de satellites de navigation,
- estimer la durée dite de transmission, écoulée entre l'instant où une position a été déterminée dans le véhicule et un instant courant où elle est reçue dans ce dispositif central, en comparant des étiquette temporelles reçues directement et des étiquettes temporelles reçues via le véhicule,
- calculer le déplacement du véhicule pendant la durée de transmission, en se basant sur la durée estimée de transmission, et en se basant sur le vecteur vitesse reçu ;
- et corriger la position reçue, en prenant en compte le déplacement ainsi calculé.

## Claims

1. Central system for locating at least one vehicle (A1) accurately, said central system being equipped with a system including:
- means (10) for determining on board the vehicle the position and the speed of said vehicle from radio signals coming from a constellation of navigation satellites (NV), and
- means (8) for periodically transmitting to a control centre the position and the speed vector thus determined, a time label supplied by said constellation of navigation satellites (NV) and the identity of the vehicle;
**characterised in that** to calculate the position of said vehicle at the current time, said system includes means for:
- directly receiving time labels supplied by said constellation of navigation satellites;
- estimating the transmission time that has elapsed between the time when a position has been determined in the vehicle and the current time when it is received in said central system, by comparing time labels received directly and time labels received via the vehicle;
- calculating the movement of the vehicle during the transmission time based on the estimated transmission time, and based on the received speed vector; and
- correcting the received position taking account of the movement calculated in this way.

## Patentansprüche

1. Zentrale Vorrichtung zur genauen Bestimmung der Position mindestens eines Fahrzeugs (A1), welches mit einem Gerät ausgerüstet ist, beinhaltend:
Mittel (10), um an Bord die Position und Geschwindigkeit dieses Fahrzeugs aus Funksignalen zu bestimmen, die von einer Konstellation von Navigationssatelliten (NV) stammen,
- und Mittel (8), um in regelmäßigen Intervallen an ein Kontrollzentrum die so ermittelte Position und Geschwindigkeit, eine von dieser Konstellation von Navigationssatelliten (NV) gelieferte Zeitmarke und die Identität des Fahrzeugs zu übertragen,
**dadurch gekennzeichnet, daß** sie zum Berechnen der Position des besagten Fahrzeugs Mittel beinhaltet, um :
- von dieser Konstellation von Navigationssatelliten gelieferte Zeitmarken direkt zu empfangen,
- die besagte Zeitspanne der Übertragung abzuschätzen, die zwischen dem Moment, zu dem im Fahrzeug eine Position ermittelt wurde, und einem laufenden Moment vergeht, zu dem sie in dieser neutralen Vorrichtung empfangen wird, indem direkt empfangene Zeitmarken und über das Fahrzeug empfangene Zeitmarken verglichen werden,
- die Ortsveränderung des Fahrzeugs während der Übertragungsdauer, gestützt auf die geschätzte Übertragungsdauer und gestützt auf den empfangenen Geschwindigkeitsvektor, zu berechnen,
- und die empfangene Position unter Berücksichtigung der so berechneten Ortsveränderung zu korrigieren.
